# EUROPEAN PATENT SPECIFICATION

(11) **EP 3 964 368 B1**
(45) Date of publication and mention of the grant of the patent: **07.06.2023**
(21) Application number: 21195028.2
(22) Date of filing: 06.09.2021
(51) Int. Cl.: B60B 21/02

(54) **IMPROVED STEEL WHEEL FOR VEHICLES AND ASSOCIATED MANUFACTURING METHOD**
VERBESSERTES STAHLRAD FÜR FAHRZEUGE UND ZUGEHÖRIGES HERSTELLUNGSVERFAHREN
ROUE D'ACIER AMÉLIORÉE POUR VÉHICULES ET PROCÉDÉ DE FABRICATION ASSOCIÉ

(30) Priority: 07.09.2020 CH 11022020
(43) Date of publication of application: 09.03.2022
(73) Proprietor: Alcar Ruote SA, 6928 Manno (CH)
(72) Inventor: Catalano, Giovanni, Gudo (CH); Alpini, Walter, Appiano Gentile (IT)
(74) Representative: Modiano, Gabriella Diana

(56) References cited:
- DE-T2- 69 610 608
- US-A1- 2010 096 910
- US-A1- 2010 117 444
- US-A1- 2011 101 770
- US-A1- 2020 207 146

## Description

The present invention relates to an improved steel wheel for vehicles and to an associated manufacturing method.

Vehicle wheels are the mechanical components that connect the tire to a (motorized or free) axle of the vehicle; they are usually used in vehicles such as motorcycles, cars, vans, trucks, and the like.

Before dealing with the description of the background art, it is appropriate to point out that in the background art wheels are usually distinguished as a function of the material that composes them, to which specific production processes are linked; if one wishes to make a basic distinction, the families of so-called "alloy" wheels and "steel" wheels are identified.

The former are provided by using alloys of materials made of aluminum, magnesium or the like; usually these wheels are manufactured by casting, molding (e.g., low-pressure molding) processes, forging or chip-forming (from a solid workpiece), substantially monolithically and as a single part. However, these wheels have a relatively high cost, a high mechanical rigidity and a poor (if not nonexistent) possibility of repair in case of damage.

Steel wheels instead are cheaper, both due to the cost of the raw material and due to the manufacturing processes, and therefore are more interesting from this point of view; furthermore, the steel of which they are composed can be recycled, and this makes them even more desirable from the point of view of environmental impact.

The present invention relates to the family of steel wheels.

In greater detail, a steel wheel for vehicles is described in European patent application published as number EP3674102 in the name of the same Applicant and is shown in the accompanying Figure 1.

According to EP3674102, this wheel A is provided by means of the coupling of a rim B with a disc J. The rim B in particular comprises a central body part D which substantially has a cylindrical extension about a central axis X, in addition to an internal shoulder profile E arranged at a first end of the body D and configured to receive the internal edge of a tire; the rim B furthermore comprises a terminal end F located at a second and opposite end of the body. The disc J of EP3674102 comprises a hub portion G, which can be connected to an axle of the vehicle, a perimetric front flange H and a connecting portion I which connects the hub portion G to the front flange H.

According to EP3674102, the front flange H is provided with an annular seat K which accommodates at least partially the terminal end F of the rim B in order to define an external shoulder profile L suitable to receive the external edge of the tire.

According to a preferred embodiment of EP3674102 that is of interest here, the disc and the rim are made of steel and the terminal end F of the rim B and the front flange H of the disc J are coupled by means of a weld (preferably a laser weld) provided substantially at the internal annular seat K.

Despite the advantages arising from the provision of a wheel according to EP3674102, the Applicant has noticed that further improvements are possible.

In particular, it is particularly desirable to improve the fatigue strength of the wheel subjected to a rotating flexural load (according to the standardized test known in the field as "rotating bending test", for example according to the ECE R124 standard or similar standards valid in the field of reference).

Furthermore, it is also desirable to reduce the variability of the results of fatigue tests, rendering the welding process less sensitive to the natural variations of forming and turning processes.

The aim of the present invention is to provide a steel wheel and an associated manufacturing method that are capable of improving the background art in one or more of the aspects indicated above.

Within the scope of this aim, an object of the invention is to provide a steel wheel for vehicles which has a high fatigue strength when the wheel is subjected to a rotating flexural load.

Another object of the invention is to render the welding process less sensitive to the natural variations of forming and turning processes that occur in manufacture.

Furthermore, an object of the present invention is to overcome the drawbacks of the background art in a manner that is alternative to any existing solutions.

Not least object of the invention is to provide a steel wheel for vehicles that is highly reliable, relatively easy to provide and at competitive costs.

This aim, as well as these and other objects which will become better apparent hereinafter, are achieved by a steel wheel for vehicles according to claim 1, optionally provided with one or more of the characteristics of the dependent claims and/or by a method for manufacturing a steel wheel for vehicles according to the associated independent claim, optionally provided with the characteristics of the associated dependent subclaims.

Further characteristics and advantages of the invention will become better apparent from the description of a preferred but not exclusive embodiment of the wheel and of the method according to the invention, illustrated by way of nonlimiting example in the accompanying drawings, wherein:

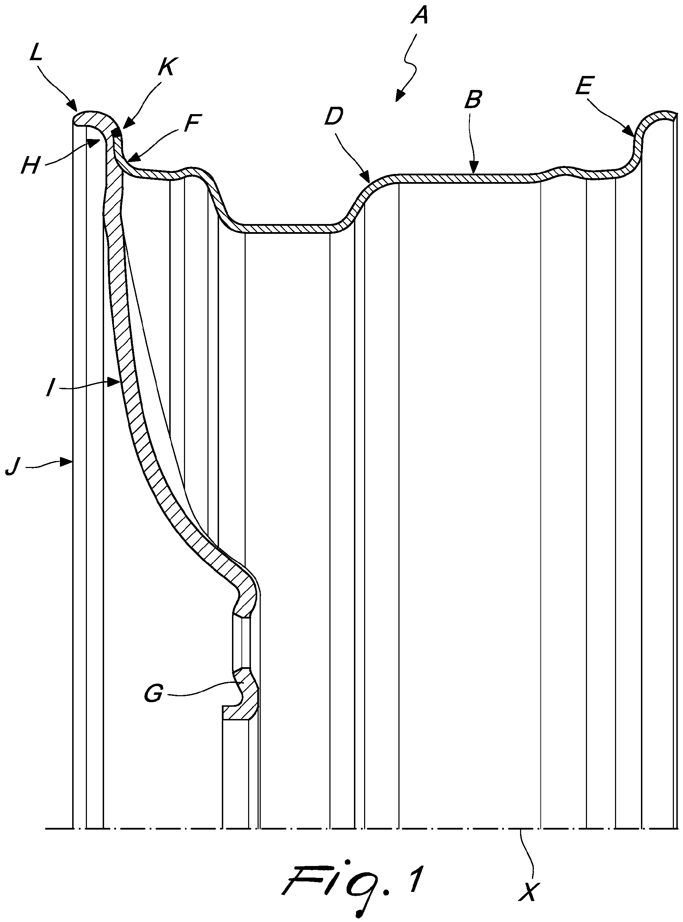

Figure 1 is a sectional view of a wheel of the background art, provided according to the teachings of EP3674102;
Figure 2 is a sectional view of part of a first possible embodiment of the wheel according to the invention;
Figure 3 is an enlarged-scale view of a detail of the preceding figure;
Figures 4 and 5 are a sectional view and an associated enlarged-scale view of some processes performed on the disc of the wheel of Figure 2 according to the method of the invention;
Figures 6 and 7 are a sectional view and an associated enlarged-scale view of some processes performed on the rim of the wheel of Figure 2 according to the method of the invention;

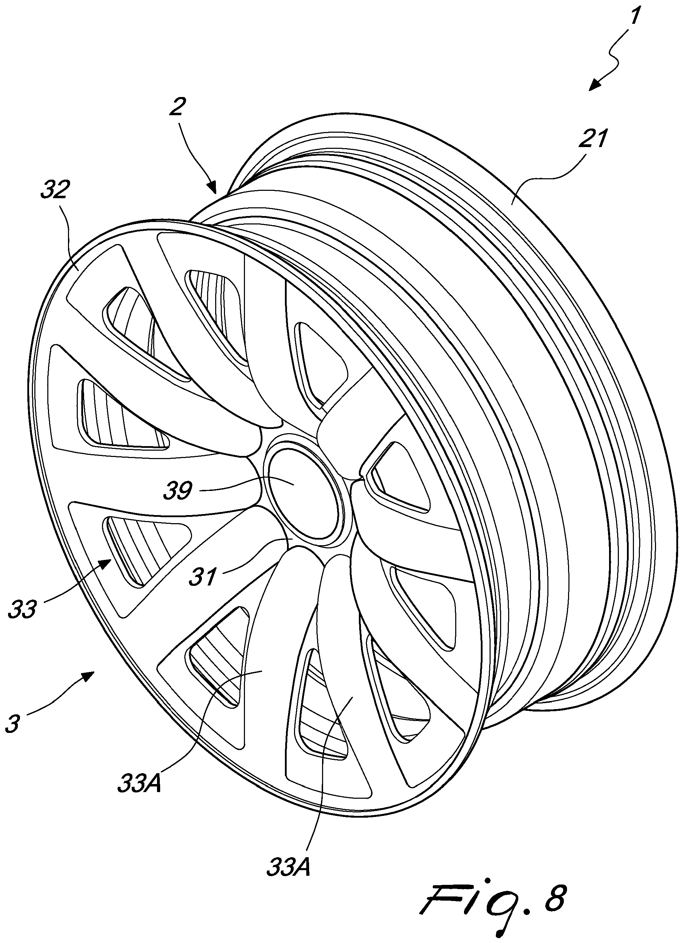

Figure 8 is a perspective view of a wheel according to the invention;
Figure 9 is a longitudinal sectional view of a wheel according to the invention with the tire mounted thereon;
Figure 10 is a Wöhler diagram of a wheel according to the background art and of a wheel according to the invention;
Figure 11 is a sectional view of part of a second possible embodiment of the wheel according to the invention;
Figure 12 is an enlarged-scale view of a detail of the preceding figure;
Figure 13 is a sectional view and an associated enlarged-scale view of some processes performed on the rim of the wheel of Figure 11 according to the method of the invention.

With reference to the cited figures, the steel wheel according to the invention is designated generally by the reference numeral 1 or 1' depending on the embodiment.

The wheel 1, 1' is made of steel and comprises a rim 2, 2' and a disc 3, 3' which are mutually coupled.

The rim 2, 2' comprises a central body part 27, 27' which has a substantially cylindrical extension and an internal shoulder profile 21, 21' which is arranged at a first end of said body 27, 27' and is configured to receive an internal edge of a tire.

In the context of the invention, the terms "internal" or "external" are used with reference to the mounting condition of the wheel 1, 1' on the vehicle: "internal" means directed toward the vehicle, while "external" means directed in the opposite direction.

As regards the central body 27, 27', it "substantially" has a cylindrical extension, in that it is extended about a central axis of symmetry X, X' and has portions with a different radius (with respect to the axis X, X') which are mutually blended and form for example grooves 26, 26' or raised reinforcement protrusions 25, 25', variously provided in the central body 27, 27' according to operating requirements (e.g., width and diameter) and on which one dwells no further.

If the tire is of the tubeless type, the central body 27, 27' forms part of the hermetic chamber in which the pressurized fluid (usually air or nitrogen or a mixture of the two) that keeps the tire inflated is present; if instead the tire is of the type with an inner tube, the central body 27, 27' forms part of the chamber in which the inner tube is accommodated.

The internal shoulder profile 21, 21' is configured to receive an internal edge of a tire and constitute an abutment for the latter when it is mounted on the wheel 1, 1'; for this purpose, the internal shoulder profile 21, 21' is radially flared and widens radially for a certain extent depending on the dimensions and types of the wheel; one dwells no further on this shoulder profile 21, 21', except to note that the internal shoulder profile 21, 21' provides in practice a continuous annular edge which protrudes from the central body 27, 27' and comprises: a curved portion for blending with the central body 27, 27', a substantially radial wall portion that is extended radially, and a flared terminal inlet portion which facilitates the mounting of the tire.

The rim 1, 1' furthermore comprises a terminal end 22, 22' arranged at a second end of the body 27, 27' that is opposite the one provided with the internal shoulder profile 21, 21'; said end will be discussed again shortly.

Moving on now to the disc 3, 3', it comprises a hub portion 31, 31' which is configured to be connected to an axle of the vehicle, a perimetric front flange 32, 32', and a connecting portion 33, 33' which connects the hub portion 31, 3 1' to the front flange 32, 32'.

It should be noted that the axle of the vehicle can be both an axle of the traction assembly (if the wheel is a driving wheel) and an axle of the steering assembly (if the wheel is steerable), and a combination of the two (if the wheel is simultaneously intended to be a driving wheel and a steerable wheel, as in front-wheel drive cars, for example).

The hub portion 31, 31' is arranged centrally on the disc 3, 3' and is configured to be connected to an axle of the vehicle; for example, the hub portion 31, 31' is provided, for this purpose, at least with through holes 38, 38' in which screws or bolts are installed which couple the wheel 1, 1' to the axle of the vehicle and with a central hole 39, 39' in which the axles of the vehicle is seated.

The front flange 32, 32' is instead positioned at the radial peripheral region of the disc 3, 3' and constitutes substantially a continuous circular border (or edge) thereof.

The connecting portion 33, 33' that connects the hub portion 31, 31' to the front flange 32, 32', in some embodiments is provided by means of a single continuous wall (optionally provided with weight reduction or ventilation holes), whereas in other embodiments it comprises a plurality of solid spokes or wire spokes 33A which extend radially from the hub portion 31 in order to connect it to the front flange 32; the number and shape of the spokes 33A is variable according to the requirements.

Going back to the disc 3, 3' as a whole, its three portions, i.e., the hub portion 31, 31', the front flange 32, 32' and the connecting portion 33, 33', are preferably monolithic (provided as a single part) with respect to each other.

The front flange 32, 32' is provided with an internal annular seat 35 in which at least part of the terminal end 22, 22' of the room 2, 2' is accommodated.

According to the invention, the terminal end 22, 22' of the room is flared in a radial direction and is extended outward by an arc C, C' comprised between 35° and 89°, preferably approximately 70°, with respect to a plane that is perpendicular to an axis of symmetry X, X' of the rim with a radius of curvature r1, r1' comprised between 3 mm and 8 mm. The Applicant has found surprisingly that with this configuration it obtains optimum fatigue strength of the wheel subjected to a rotating flexural load.

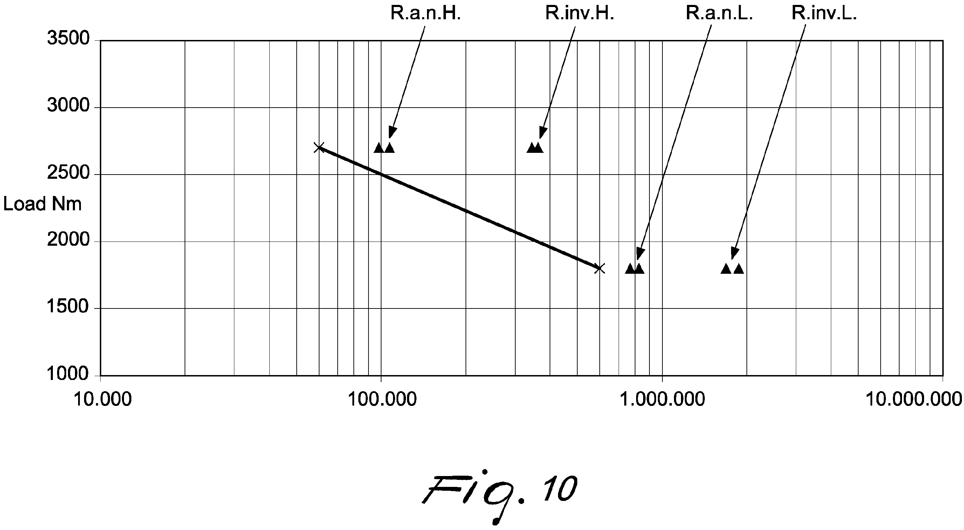

In particular, with respect to the nonetheless good results of the wheel provided according to EP3674102, the result is even better, as shown in Figure 10: said figure shows a Wöhler diagram which compares the results of a fatigue test performed on a wheel according to EP3674102 and of a wheel according to the present invention; both wheels have the same dimensions and the same materials and the test was performed in accordance with the ECE R124 standard.

As can be seen from the chart, the wheel according to EP3674102 with a load of 2700 Nm reaches 98,000 cycles before failing (R.a.n.H. point), while the wheel according to the invention performs as many as 344,000 (R.inv.H. point); the same is observed with a lower load, equal to 1800 Nm, wherein the wheel according to EP3674102 reaches 826,000 cycles before failure (R.a.n.L. point), while the wheel according to the invention performs 1,874,000 (R.inv.L. point).

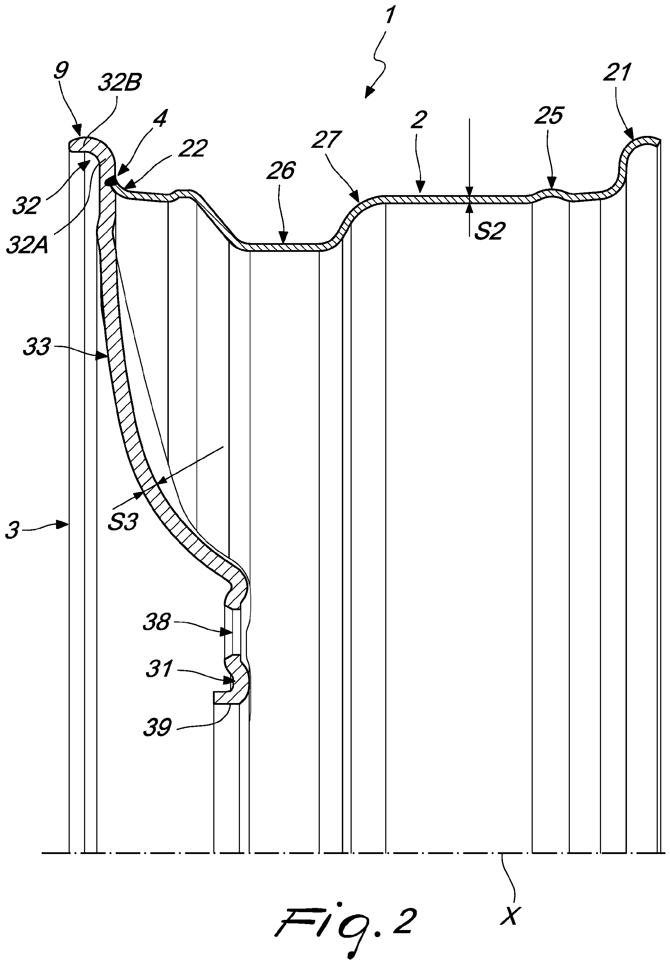

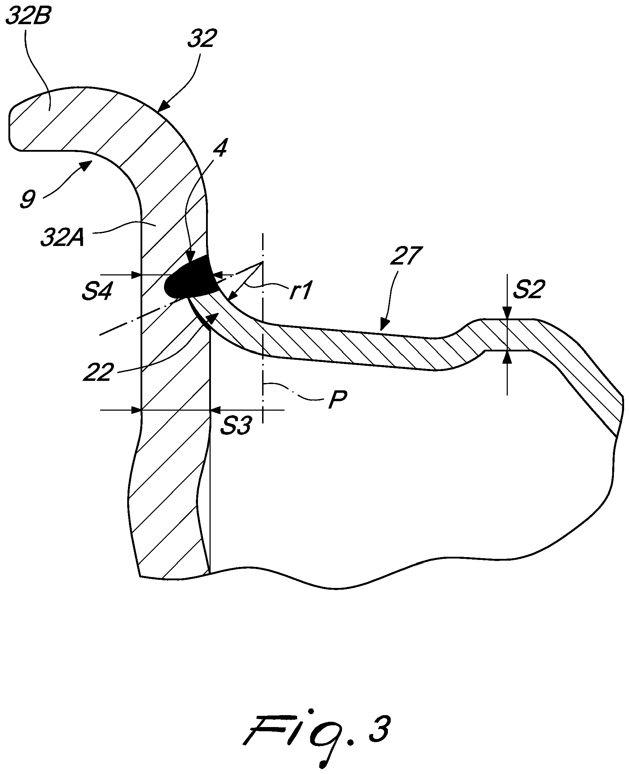

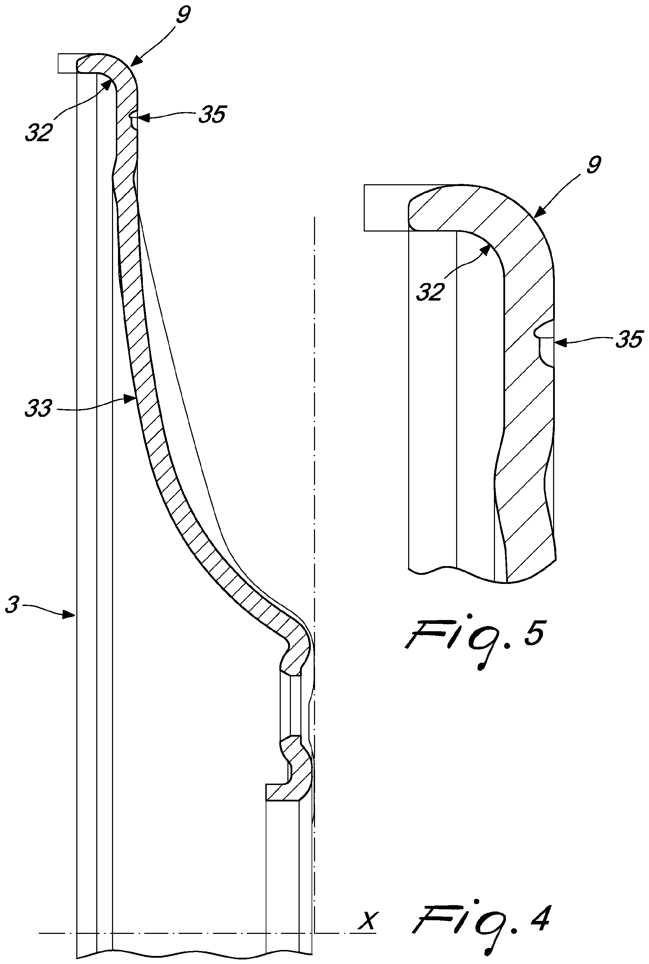

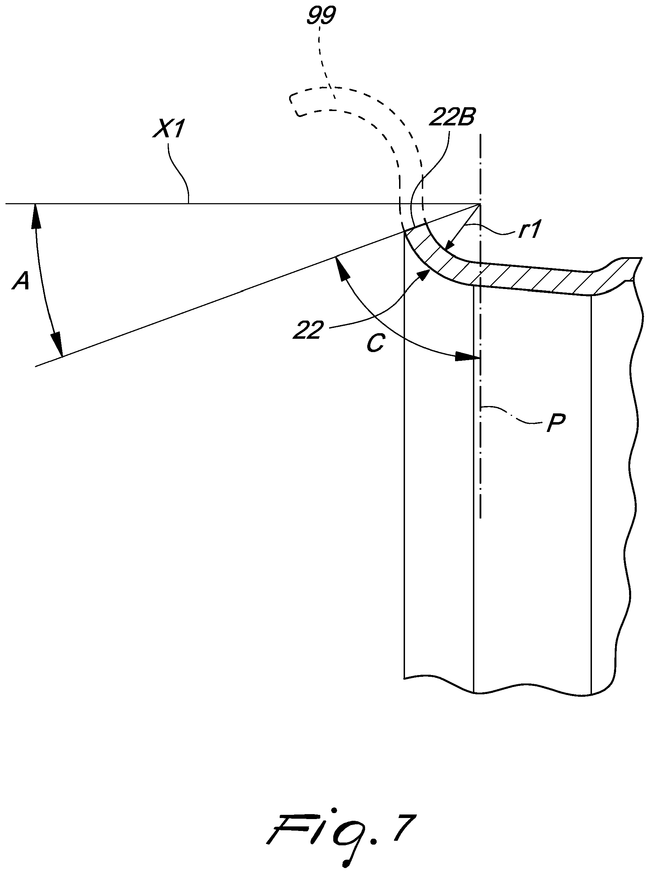

With reference now in greater detail to the first embodiment shown in Figures 2 to 7, the terminal end 22 of the rim is flared in a radial direction and is extended outward by an arc C comprised between 60° and 89°, preferably approximately 70° with respect to a plane that is perpendicular to an axis of symmetry of the rim with a radius of curvature comprised preferably between 5.5 mm and 6.5 mm.

In the accompanying exemplifying figures, the arc C has an extension of approximately 70° with respect to the plane P that is perpendicular to the axis X.

Also in this first embodiment, the front flange 32 comprises a radially extended portion 32A, which is substantially rectilinear and is connected with a folded edge to the outside 32B.

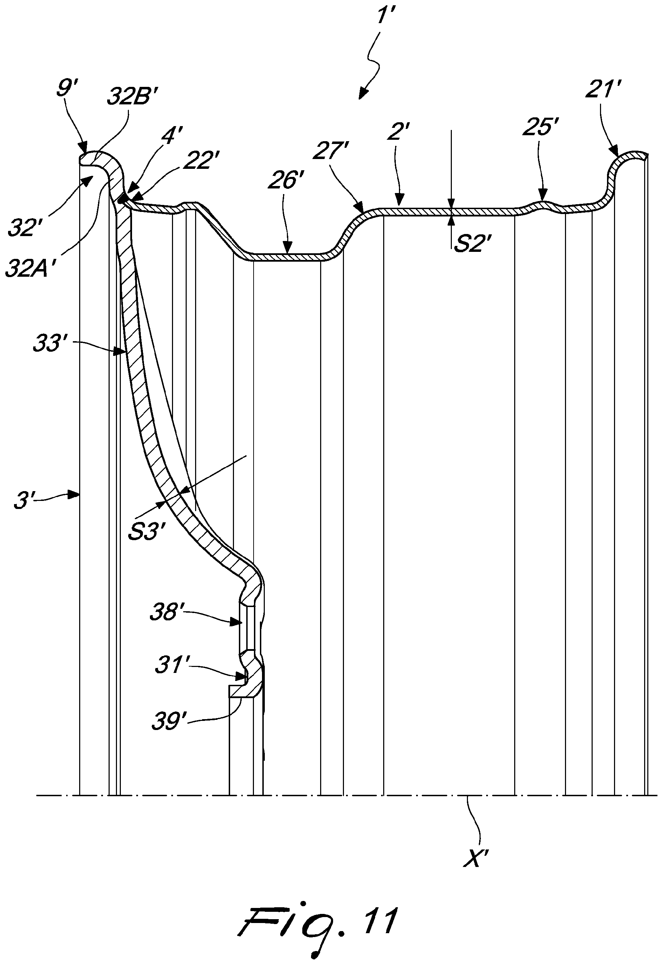

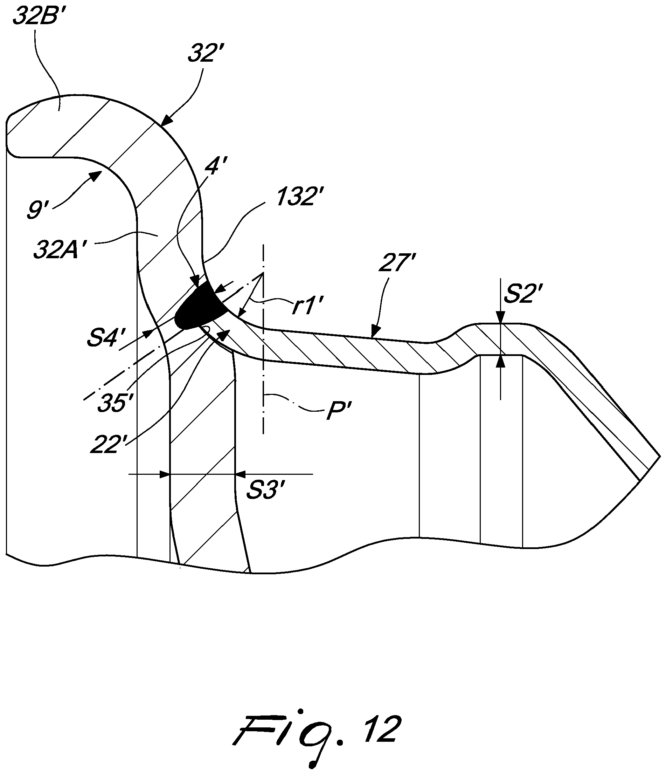

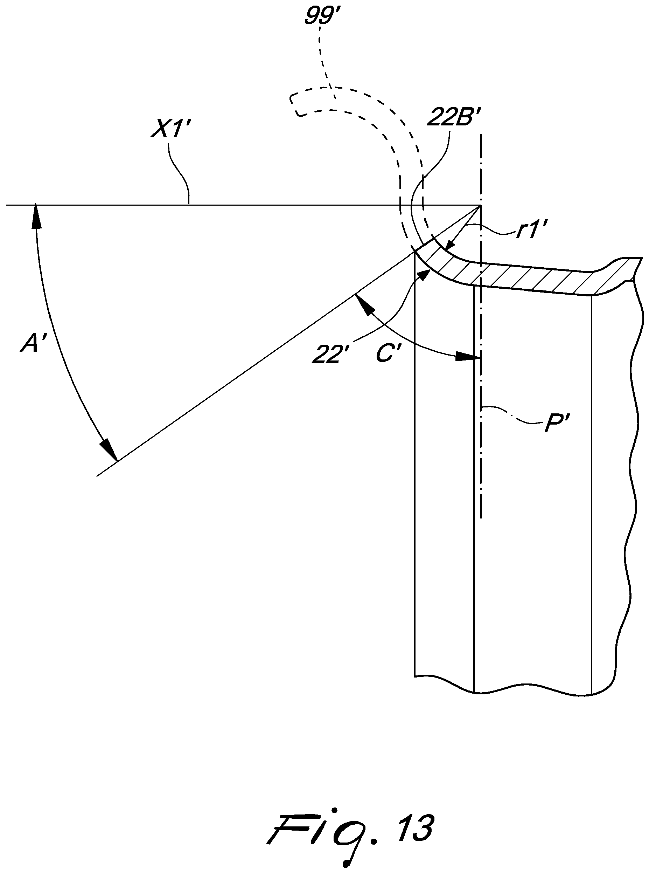

Figures 11, 12 and 13 show a second embodiment, which differs from the first embodiment only in the terminal end 22' of the rim 2' and in the shape of the radially extended portion 32A' of the flange 32'. In this constructive variation, the terminal end 22' of the rim 2' is extended outward by an arc C' comprised between 35° and 60°.

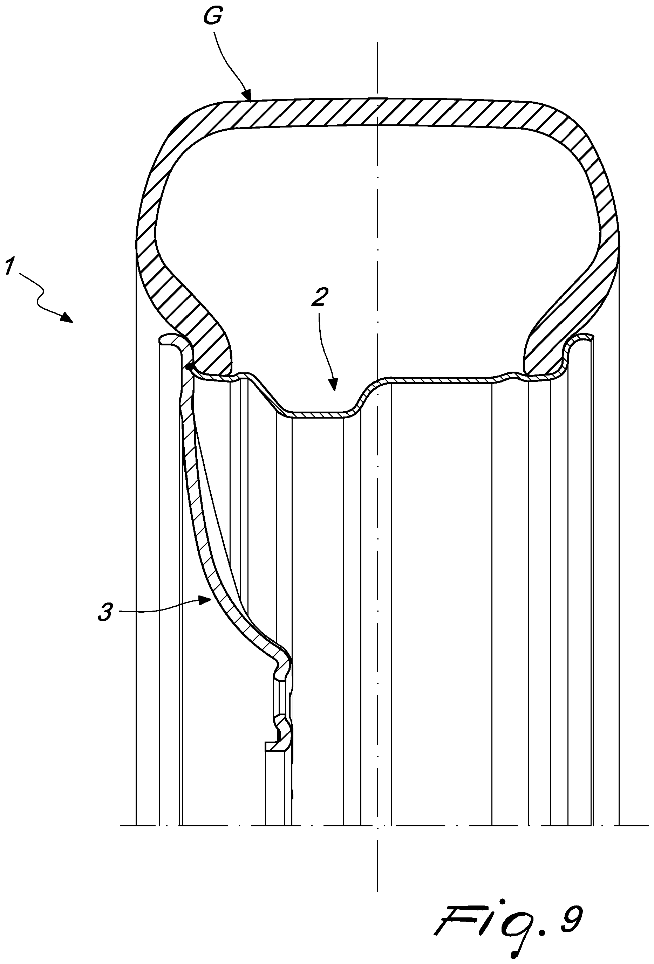

Also in this second embodiment, according to an optimum constructive solution, the front flange 32' comprises a radially extended portion 32A' which is curved (which is a portion that is curved outward) and has a concavity 132' that is directed toward the inside of the wheel 1' (i.e., directed toward the rim portion 2'). This concavity 132' is connected to an edge 32B' which is folded outward so as to have a substantially S-shaped profile. Preferably, the internal annular seat 35' in which at least part of the terminal end 22' is accommodated is provided in said concavity 132'. Going back now to the characteristics that are common to all the embodiments, according to the invention, therefore, the external shoulder profile 9, 9' of the wheel 1, 1', configured to receive the other edge of a tire G, as shown in Figure 9, is defined.

Essentially, the terminal end 22, 22" of the rim 2, 2' is not provided with walls that extend radially at right angles to the axis X,, X' but is completely curved or indeed flared so as to widen with respect to the diameter of the directly adjacent body portion.

The rim portion 2, 2' (comprising the central body 27, 27', the internal shoulder profile 21, 21' and the terminal end 22, 22') is monolithic.

Preferably, the rim portion 2, 2' has a wall thickness S2, S2' that can vary in a longitudinal direction and is preferably provided by means of a single portion of sheet metal, as will be described better hereinafter during the description of the manufacturing process of the wheel 1.

This characteristic allows to adopt wall thicknesses S2, S2' that are consistent with the necessary structural strength, with a significant saving in terms of weight and material.

Going back to the front flange 32, 32', as already mentioned, it comprises a radially extended portion 32A, 32A' which is connected to an externally folded edge 32B, 32B'; the externally folded edge 32B, 32B' is arranged substantially at right angles to or, as an alternative, inclined with respect to the radially extended portion 32A, 32A' and constitutes a flared portion of the external shoulder profile 9, 9' in order to facilitate the mounting of the tire, in a manner similar to the terminal inlet portion of the other shoulder profile, the internal one, 21, 21'.

Preferably, the entire disc 3, 3' has the same wall thickness S3, S3' (which remains constant throughout its extension) and is preferably provided by means of a single portion of sheet metal, as will be described better hereinafter during the description of the manufacturing process of the wheel 1.

According to the invention, preferably, the terminal end 22, in cross-section, has a substantially planar free edge 22B, 22B', which is extended on a plane which, in a longitudinal cross-section, is inclined by an angle A (which is the reciprocal angle of C) comprised between 0° and 55° (i.e., between 0° and 30° in the first embodiment and between 30° and 55° in the second embodiment) with respect to a straight line X1, X1' which is parallel to the axis X, X' of the rim 2, 2'.

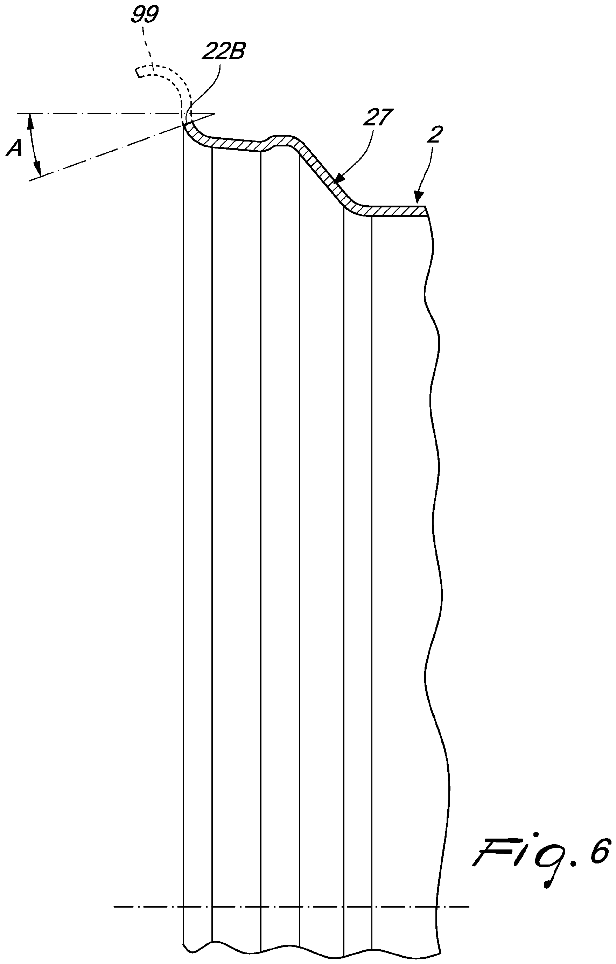

Said free edge 22B, 22B' is provided, in accordance with the method of the invention, by means of a chip-forming operation, shown schematically in Figures 6, 7 and 13 and which will be discussed further shortly.

The annular seat 35, 35' is extended in a continuous annular manner over the entire face of the front flange 32, 32' that is directed toward the rim portion 2, 2' arranged at the terminal end 22, 22' so as to allow the accommodation of the latter.

The annular seat 35, 35' is preferably provided at the radially extended portion 32A, 32A' of the front flange 32, 32' and on the face thereof that is directed toward the rim portion 2, 2'.

Preferably, in the region in which the annular seat 35, 35' accommodates the terminal end 22, 22', the wall thickness S4, S4' is substantially equal to the wall thickness S3, S3' of the disc 3, 3'.

This characteristic can be obtained for example by means of a chip-forming machining process, by providing the annular seat 35, 35' with a depth approximately equal to the thickness S2, S2' of the rim portion 2, 2', so that when the terminal end 22, 22' is accommodated in the annular seat 35, 35' the wall thickness in the overlap region S4, S4r' is equal to S3, S3'.

The terminal end 22, 22' of the rim 2, 2' and the front flange 32, 32' of the disc 3, 3' are coupled by means of a weld 4, 4' which is extended preferably in an annularly continuous manner and couples the terminal end 22, 22' to the front flange 32, 32'.

Preferably, in order to avoid additional processes, the weld 4, 4' is an autogenous weld without added material (i.e. without weld material).

Preferably, the autogenous weld without added material is a concentrated energy weld; even more preferably, it is an electron beam or laser weld, even more preferably provided in a single pass so as to be a single continuous weld over the entire circumference.

In alternative embodiments, the weld is a friction weld (so-called friction stir welding).

Preferably, the annular seat 35, 35' is sized so as to accommodate the terminal end portion 22, 22' that will be accommodated therein.

The (preferential) absence of the added material, together with the presence of the internal annular seat 35, 35' which accommodates the terminal end 22, 22', allows to avoid excessive thicknesses and additional processes.

As regards the materials, preferably the rim 2, 2' is made of a single monolithic steel piece; the disc 3, 3' is likewise provided by a single monolithic steel piece.

Even more preferably, the rim 2, 2' is made of microalloyed steel (or low-alloy steel).

Even more preferably, the disc 3, 3' is made of biphasic ferritic/martensitic steel.

Moving on now to analyzing the manufacturing process of the wheel 1, 1' according to the invention, in its general outline it comprises a step of forming the rim, which comprises the following substeps:
a1) preparing a band of metallic strip, preferably steel, even more preferably microalloyed steel;
a2) bending said metallic strip band, preferably by means of a cambering process;
a3) welding together two opposite portions of said cambered band in order to provide a substantially cylindrical metallic body;
a4) flattening the welding bead provided in the preceding substep and (optionally) rounding the body again;
a5) performing at least one, preferably multiple, rolling processes in order to provide at least one internal shoulder profile 21, 21' and a parallel terminal end with a radial extension 99, 99' at the opposite end faces of said substantially cylindrical metallic body;
a6) providing a chip-forming machining on said terminal end with a radial extension 99, 99', so as to provide the terminal end 22, 22' of the rim which is flared in a radial direction which extends outward by an arc C, C' comprised between 35° and 89° (between 60° and 89° for the first embodiment or between 35° and 60° for the second one) with respect to a plane P, P' which is perpendicular to an axis of symmetry X, X' of the rim with a radius of curvature r1, r1' comprised between 3 mm and 8 mm (preferably comprised between 5.5 mm and 6.5 mm for the first embodiment).

## Claims

1. A steel wheel (1, 1') for vehicles, comprising a rim (2, 2') and a disc (3, 3') which are mutually coupled,
wherein the rim (2, 2') comprises:
- a central body part (27, 27') which substantially has a cylindrical extension,
- an internal shoulder profile (21, 21') arranged at a first end of said body (27, 27') and configured to receive an internal edge of a tire,
- a terminal end (22, 22') arranged at a second and opposite end of said body (27, 27'),
and wherein the disc (3, 3') comprises:
- a hub portion (31, 31') configured to be connected to an axle of the vehicle, a perimetric front flange (32, 32') and a connecting portion (33, 33') which connects the hub portion (31, 31') to the front flange (32, 32'),
wherein the front flange (32, 32') is provided with an annular seat (35, 35') which accommodates at least partly the terminal end (22, 22') of the rim (2, 2'),
**characterized in that**
the terminal end (22, 22') of the rim is flared in a radial direction and is extended outward by an arc (C, C') comprised between 35° and 89° with respect to a plane that is perpendicular to an axis of symmetry (X, X') of the rim with a radius of curvature (r1, r1') comprised between 3 mm and 8 mm.

2. The wheel according to claim 1, wherein the terminal end (22') of the rim is extended outward by an arc (C') comprised between 35° and 60°.

3. The wheel according to claim 2, wherein said front flange (32') comprises a radially extended curved portion (32A') which has a concavity (132') that is directed inward and connected with an edge (32B') that is folded outward, so as to have a substantially S-shaped profile; said annular seat (35') being provided in said concavity (132').

4. The wheel according to claim 1, wherein the terminal end (22) of the rim is extended outward by an arc (C) comprised between 60° and 89°.

5. The wheel according to claim 4, wherein said radius of curvature (r1) is comprised between 5.5 mm and 6.5 mm.

6. The wheel according to claim 4 or 5, wherein the terminal end (22) has a substantially planar free edge (22B) which is extended on a plane that is inclined by an angle comprised between 0° and 30° with respect to a central axis of symmetry (X) of the rim (2).

7. The wheel according to one or more of claims 4 to 6, wherein the terminal end (22) of the rim is extended outward by an arc (C) equal to approximately 70°.

8. The wheel according to one or more of the preceding claims, wherein the rim (2, 2') is provided by a single monolithic piece of steel and the disc (3, 3') is provided by a single monolithic piece of steel.

9. The wheel according to one or more of the preceding claims, wherein the rim (2, 2') is made of of microalloyed steel and the disc (3, 3') is made of biphasic ferritic/martensitic steel.

10. The wheel according to one or more of the preceding claims, wherein the rim (2, 2') and the disc (3, 3') are mutually coupled by autogenous welding (4, 4') with no added material.

11. The wheel according to the preceding claim, wherein the weld is a concentrated energy weld, preferably an electron beam or laser weld.

12. The wheel according to one or more of the preceding claims, wherein the annular seat (35, 35') is provided at a radially extended portion (32A, 32A') of the front flange (32, 32') and on the face thereof directed toward the rim portion (2, 2').

13. A method for manufacturing the wheel (1, 1') according to one or more of the preceding claims, comprising a rim forming step which comprises the following substeps:
a1) preparing a band of metallic strip, preferably steel, even more preferably microalloyed steel;
a2) bending said metallic strip band, preferably by means of a cambering process;
a3) welding together two opposite portions of said cambered band in order to provide a substantially cylindrical metallic body;
a4) flattening the welding bead provided in the preceding substep and optionally rounding the body again;
a5) performing at least one, preferably multiple, rolling processes in order to provide at least one internal shoulder profile (21, 21') and a parallel terminal end with a radial extension (99, 99') at the opposite end faces of said substantially cylindrical metallic body;
a6) providing a chip-forming machining on said terminal end with a radial extension (99, 99'), so as to provide the terminal end (22, 22') of the rim which is flared in a radial direction which extends outward by an arc (C, C') comprised between 35° and 89° with respect to a plane (P, P') which is perpendicular to an axis of symmetry (X, X') of the rim with a radius of curvature (r1, r1') comprised between 3 mm and 8 mm.

## Patentansprüche

1. Ein Stahlrad (1, 1') für Fahrzeuge, das einen Rand (2, 2') und eine Scheibe (3, 3') umfasst, die miteinander gekoppelt sind,
wobei der Rand (2, 2') Folgendes umfasst:
- einen zentralen Körperabschnitt (27, 27'), der im Wesentlichen eine zylindrische Erstreckung hat,
- ein internes Schulterprofil (21, 21'), angeordnet an einem ersten Ende des Körpers (27, 27') und konfiguriert, um einen inneren Rand eines Reifens aufzunehmen,
- ein terminales Ende (22, 22'), angeordnet an einem zweiten und gegenüberliegenden Ende des Körpers (27, 27'),
und wobei die Scheibe (3, 3') Folgendes umfasst:
- einen Nabenabschnitt (31, 31'), ausgebildet, um mit einer Achse des Fahrzeugs verbunden zu werden, einen vorderen Umfangsflansch (32, 32') und einen Verbindungsabschnitt (33, 33'), der den Nabenabschnitt (31, 31') mit dem vorderen Flansch (32, 32') verbindet,
wobei der vordere Flansch (32, 32') mit einem ringförmigen Sitz (35, 35') ausgestattet ist, welcher das terminale Ende (22, 22') des Randes (2, 2') zumindest teilweise aufnimmt;
**dadurch gekennzeichnet, dass**
das terminale Ende (22, 22') des Randes in eine radiale Richtung aufgeweitet und nach außen um einen Bogen (C, C') erweitert ist, welcher zwischen 35° und 89° mit Bezug auf eine Ebene beträgt, die senkrecht zu einer Symmetrieachse (X, X') des Randes ist, mit einem Krümmungsradius (r1, r1') zwischen 3 mm und 8 mm.

2. Das Rad gemäß Anspruch 1, wobei das terminale Ende (22') des Randes nach außen um einen Bogen (C') erweitert ist, der zwischen 35° und 60° beträgt.

3. Das Rad gemäß Anspruch 2, wobei der vordere Flansch (32') einen radial erweiterten gekrümmten Abschnitt (32A') umfasst, der eine Konkavität (132') hat, welche nach innen gerichtet und mit einem Rand (32B') verbunden ist, der nach außen geknickt ist, um so ein im Wesentlichen S-förmiges Profil zu ergeben; wobei der ringförmige Sitz (35') in der Konkavität (132') angeordnet ist.

4. Das Rad gemäß Anspruch 1, wobei das terminale Ende (22) des Randes nach außen um einen Bogen (C) erweitert ist, der zwischen 60° und 89° beträgt.

5. Das Rad gemäß Anspruch 4, wobei der Krümmungsradius (r1) zwischen 5,5 mm und 6,5 mm beträgt.

6. Das Rad gemäß Anspruch 4 oder 5, wobei das terminale Ende (22) eine im Wesentlichen planare freie Kante (22B) hat, die auf einer Ebene erweitert ist, welche in einem Winkel zwischen 0° und 30° im Verhältnis zu einer zentralen Symmetrieachse (X) des Randes (2) geneigt ist.

7. Das Rad gemäß einem oder mehreren der Ansprüche 4 bis 6, wobei das terminale Ende (22) des Randes nach außen um einen Bogen (C) erweitert ist, der gleich ungefähr 70° ist.

8. Das Rad gemäß einem oder mehreren der obigen Ansprüche, wobei der Rand (2, 2') von einem einzigen monolithischen Stück Stahl gebildet wird und die Scheibe (3, 3') von einem einzigen monolithischen Stück Stahl gebildet wird.

9. Das Rad gemäß einem oder mehreren der obigen Ansprüche, wobei der Rand (2, 2') aus mikrolegiertem Stahl besteht und die Scheibe (3, 3') aus zweiphasigem ferritischem/martensitischem Stahl besteht.

10. Das Rad gemäß einem oder mehreren der obigen Ansprüche, wobei der Rand (2, 2') und die Scheibe (3, 3') miteinander durch autogenes Schweißen (4, 4') ohne hinzugefügtes Material gekoppelt sind.

11. Das Rad gemäß dem obigen Anspruch, wobei die Schweißstelle eine Schweißstelle mit konzentrierter Energie, vorzugsweise eine Elektronenstrahl- oder Laserverschweißung, ist.

12. Das Rad gemäß einem oder mehreren der obigen Ansprüche, wobei der ringförmige Sitz (35, 35') an einem radial erweiterten Abschnitt (32A, 32A') des vorderen Flanschs (32, 32') und an der Seite desselben angebracht ist, die dem Randabschnitt (2, 2') zugewandt ist.

13. Ein Verfahren zur Herstellung des Rades (1, 1') gemäß einem oder mehreren der obigen Ansprüche, das einen Randformschritt umfasst, welcher die folgenden Teilschritte umfasst:
a1) Herstellen eines Bandes aus Metallstreifen, vorzugsweise Stahl, noch stärker bevorzugt mikrolegiertem Stahl;
a2) Biegen des Metallstreifenbandes, vorzugsweise durch ein Bombierungsverfahren;
a3) Zusammenschweißen zweier gegenüberliegender Abschnitte des bombierten Bandes, um einen im Wesentlichen zylindrischen Metallkörper herzustellen;
a4) Glätten der im vorigen Teilschritt hergestellten Schweißraupe und wahlweise erneutes Runden des Körpers;
a5) Durchführen mindestens eines, vorzugsweise mehrerer, Walzverfahren, um mindestens ein internes Schulterprofil (21, 21') und ein paralleles terminales Ende mit radialer Erstreckung (99, 99') an den gegenüberliegenden Endflächen des im Wesentlichen zylindrischen Metallkörpers herzustellen;
a6) Durchführen einer spanenden Bearbeitung an dem terminalen Ende mit radialer Erstreckung (99, 99'), um das terminale Ende (22, 22') des Randes herzustellen, das in eine radiale Richtung aufgeweitet ist und sich nach außen in einem Bogen (C, C') erstreckt, der zwischen 35° und 89° mit Bezug auf eine Ebene (P, P') umfasst, welche senkrecht zu einer Symmetrieachse (X, X') des Randes ist, mit einem Krümmungsradius (r1, r1') zwischen 3 mm und 8 mm.

## Revendications

1. Roue en acier (1, 1') pour véhicules, comprenant une jante (2, 2') et un disque (3, 3') qui sont solidaires l'un de l'autre,
dans laquelle la jante (2, 2') comprend :
- une partie de corps central (27, 27') qui a substantiellement une étendue cylindrique,
- un profil d'épaulement intérieur (21, 21') placé à une première extrémité dudit corps (27, 27') et configuré pour recevoir un bord intérieur d'un pneumatique,
- une extrémité terminale (22, 22') placée à une deuxième extrémité, opposée, dudit corps (27, 27'),
et dans laquelle le disque (3, 3') comprend :
- une partie de moyeu (31, 31') configurée pour être connectée à un essieu du véhicule, une bride avant périmétrique (32, 32') et une partie de connexion (33, 33') qui relie la partie de moyeu (31, 31') à la bride avant (32, 32'),
dans laquelle la bride avant (32, 32') est pourvue d'un siège annulaire (35, 35') dans lequel se loge au moins partiellement l'extrémité terminale (22, 22') de la jante (2, 2'),
**caractérisée en ce que** l'extrémité terminale (22, 22') de la jante est évasée dans une direction radiale et est prolongée vers l'extérieur par un arc (C, C') compris entre 35° et 89° par rapport à un plan qui est perpendiculaire à un axe de symétrie (X, X') de la jante avec un rayon de courbure (r1, r1') compris entre 3 mm et 8 mm.

2. Roue selon la revendication 1, dans laquelle l'extrémité terminale (22') de la jante est prolongée vers l'extérieur par un arc (C') compris entre 35° et 60°.

3. Roue selon la revendication 2, dans laquelle ladite bride avant (32') comprend une partie courbée s'étendant radialement (32A') qui a une concavité (132') qui est dirigée vers l'intérieur et reliée à un bord (32B') qui est plié vers l'extérieur, afin d'avoir un profil substantiellement en forme de S ; ledit siège annulaire (35') étant formé dans ladite concavité (132').

4. Roue selon la revendication 1, dans laquelle l'extrémité terminale (22) de la jante est prolongée vers l'extérieur par un arc (C) compris entre 60° et 89°.

5. Roue selon la revendication 4, dans laquelle ledit rayon de courbure (r1) est compris entre 5,5 mm et 6,5 mm.

6. Roue selon la revendication 4 ou 5, dans laquelle l'extrémité terminale (22) a un bord libre substantiellement plat (22B) qui s'étend sur un plan qui est incliné d'un angle compris entre 0° et 30° par rapport à un axe de symétrie central (X) de la jante (2).

7. Roue selon l'une ou plusieurs des revendications 4 à 6, dans laquelle l'extrémité terminale (22) de la jante est prolongée vers l'extérieur par un arc (C) égal à 70° environ.

8. Roue selon l'une ou plusieurs des revendications précédentes, dans laquelle la jante (2, 2') est formée d'une seule pièce d'acier monolithique et le disque (3, 3') est formé d'une seule pièce d'acier monolithique.

9. Roue selon l'une ou plusieurs des revendications précédentes, dans laquelle la jante (2, 2') est faite d'un acier micro-allié et le disque (3, 3') est fait d'un acier biphasé ferritique-martensitique.

10. Roue selon l'une ou plusieurs des revendications précédentes, dans laquelle la jante (2, 2') et le disque (3, 3') sont rendus solidaires par soudage autogène (4, 4') sans matière d'apport.

11. Roue selon la revendication précédente, dans laquelle le soudage est un soudage à énergie concentrée, de préférence un soudage à faisceau d'électrons ou un soudage laser.

12. Roue selon l'une ou plusieurs des revendications précédentes, dans laquelle le siège annulaire (35, 35') est formé dans une partie s'étendant radialement (32A, 32A') de la bride avant (32, 32') et sur la face de celle-ci orientée vers la partie de jante (2, 2').

13. Procédé de fabrication de la roue (1, 1') selon l'une ou plusieurs des revendications précédentes, comprenant une étape de formation de jante qui comprend les sous-étapes suivantes :
a1) préparer une bande de ruban métallique, de préférence en acier, et mieux encore en acier micro-allié ;
a2) tordre ladite bande métallique, de préférence au moyen d'un processus de cintrage ;
a3) souder ensemble deux parties opposées de ladite bande cintrée afin de former un corps métallique substantiellement cylindrique ;
a4) aplatir le cordon de soudure formé dans la sous-étape précédente et éventuellement arrondir de nouveau le corps ;
a5) exécuter au moins un, de préférence plusieurs, processus de laminage afin de former au moins un profil d'épaulement intérieur (21, 21') et une extrémité terminale parallèle avec un prolongement radial (99, 99') au niveau des faces d'extrémité opposées dudit corps métallique substantiellement cylindrique ;
a6) réaliser un usinage avec enlèvement de matière sur ladite extrémité terminale ayant un prolongement radial (99, 99'), afin de former l'extrémité terminale (22, 22') de la jante qui est évasée dans une direction radiale qui est prolongée vers l'extérieur par un arc (C, C') compris entre 35° et 89° par rapport à un plan (P, P') qui est perpendiculaire à un axe de symétrie (X, X') de la jante avec un rayon de courbure (r1, r1') compris entre 3 mm et 8 mm.
